# EUROPÄISCHE PATENTSCHRIFT

(11) **EP 0 742 425 B1**
(45) Veröffentlichungstag und Bekanntmachung des Hinweises auf die Patenterteilung: **06.08.2003**
(21) Anmeldenummer: 96201135.9
(22) Anmeldetag: 07.05.1996
(51) Int. Cl.: G01F 11/16, B23K 3/06

(54) **Vorrichtung zum Aufbringen genau dosierter Mengen eines viskosen Mediums auf Auflageflächen**
Apparatus for depositing precisely metered amounts of a viscous medium on a surface
Dispositif pour appliquer sur des surfaces des quantités exactement dosées d'un matériau visqueux

(30) Priorität: 11.05.1995 DE 19517342
(43) Veröffentlichungstag der Anmeldung: 13.11.1996
(73) Patentinhaber: Philips Intellectual Property & Standards GmbH, 20099 Hamburg (DE); Koninklijke Philips Electronics N.V., 5621 BA Eindhoven (NL)
(72) Erfinder: Gumbert, Hans, c/o Philips Patentverwaltung GmbH, 22335 Hamburg (DE)
(74) Vertreter: von Laue, Hanns-Ulrich, Dipl.-Ing.

(56) Entgegenhaltungen:
- FR-A- 2 692 569
- GB-A- 1 089 747
- US-A- 4 021 062
- PATENT ABSTRACTS OF JAPAN vol. 15, no. 86 (E-1039), 28.Februar 1991 & JP-A-02 301184 (MATSUSHITA), 13.Dezember 1990,

## Beschreibung

Die Erfindung bezieht sich auf eine Vorrichtung zum Aufbringen genau dosierter Mengen eines viskosen Mediums auf Auflageflächen.

Derartige Vorrichtungen sind beispielsweise aus der JP 2-301184 und FR 2 692 569 bekannt. Die in JP 2-301184 offenbarte Vorrichtung besteht aus einer horizontal angeordneten Dosierplatte, welche einen Durchbruch aufweist, in dem sich formschlüssig ein in vertikaler Richtung verschiebbarer Stempel befindet. Zunächst befindet sich der Stempel derart in einer Mittelstellung, daß sich zwischen der Oberseite des Stempels und der Oberseite der Dosierplatte ein Hohlraum ergibt. Auf der Oberseite der Dosierplatte seitlich des Durchbruchs befindet sich das zu dosierende viskose Medium. Dieses wird mittels einer parallel zu der Oberseite der Dosierplatte arbeitenden Rakeleinrichtung in den Hohlraum zwischen der Oberseite des Stempels und der Oberseite der Dosierplatte eingebracht. Nachfolgend wird der Stempel in senkrechter Richtung nach oben verfahren und das viskose Medium von unten auf eine Auflagefläche gedrückt. Danach wird der Stempel wieder nach unten gefahren, und das viskose Medium bleibt an der Auflagefläche haften. Ein derartiges Verfahren weist jedoch einige Nachteile auf. Eine Dosierung des viskosen Mediums mittels des Stempels ist nur in vertikaler Richtung von unten nach oben möglich, wodurch die Einsatzmöglichkeiten dieses Verfahrens stark eingeschränkt sind. So ist es nicht möglich, genau dosierte Mengen des viskosen Mediums auf sich in vertikaler Richtung erstreckende Auflageflächen oder auf von anderen Bauelementen verdeckte Auflageflächen aufzubringen. Hierbei ist z.B. an das Setzen von Fettpunkten in einem sich in der Montage befindlichen Magnetbandkassettengerät gedacht. Des weiteren ist die Dosiermenge bei diesem Verfahren von der momentanen Viskosität des Mediums abhängig. Diese wird wiederum von der Raumtemperatur und der Luftfeuchtigkeit beeinflußt. Abhängig von der momentanen Viskosität des Mediums fließt ein Teil des Mediums beim Anheben des Stempels von dessen Oberseite herunter. Ebenso ist die Menge des viskosen Mediums, die beim Andruck des Stempels auf die Auflagefläche an dieser haften bleibt, von der momentanen Viskosität des Mediums und somit von Raumtemperatur und Luftfeuchtigkeit abhängig. Ein weiterer Nachteil ist, daß die Stempelgröße in Abhängigkeit von der gewünschten Dosiermenge geändert werden muß. Je größer die gewünschte Dosiermenge, desto größer muß die Fläche der Oberseite des Stempels sein, damit eine möglichst kleine Menge des viskosen Mediums beim Anheben des Stempels von dessen Oberseite herunter fließt.

Es ist Aufgabe der Erfindung, eine Vorrichtung zu schaffen, mittels derer genau dosierte Mengen eines viskosen Mediums unabhängig von dessen momentaner Viskosität auf vertikal oder schräg Liegenden Auflageflächen aufgebracht werden können.

Die erfindungsgemäße Vorrichtung besteht aus
- einer mindestens einen Durchbruch aufweisenden Gegenplatte mit einer Oberseite und einer Unterseite,
- einer mindestens einen Durchbruch aufweisenden Dosierplatte mit einer Oberseite und einer Unterseite, wobei die Unterseite der Dosierplatte auf der Oberseite der Gegenplatte aufliegt und wobei es möglich ist, die relative Lage zwischen der Gegenplatte und der Dosierplatte durch ein Verschieben von Dosierplatte oder Gegenplatte zu verändern,
- je Durchbruch der Gegenplatte einen an innen hohlen biegsamen Röhrchen, das aus der Gegenplatte herausragt und dessen Außenwand an einem Röhrchenende mit der Durchbruchswand des Durchbruchs der Gegenplatte formschlüsssig verbunden ist,
- je Durchbruch der Gegenplatte einem biegsamen Stempel, der durch die Durchbrüche der Dosierplatte und der Gegenplatte und durch das innen hohle Röhrchen einschiebbar ist,
- einer parallel zu der Oberseite der Dosierplatte arbeitenden Rakeleinrichtung, mittels derer ein viskoses Medium in den Durchbruch der Dosierplatte eingebracht werden kann.

Zunächst sind die Gegenplatte und die Dosierplatte derart gegeneinander verschoben, daß der Durchbruch der Gegenplatte und der Durchbruch der Dosierplatte sich nicht überdecken. Nun wird das auf der Oberseite der Dosierplatte aufgebrachte viskose Medium mittels der Rakeleinrichtung in den Durchbruch der Dosierplatte eingebracht. Die Dosiermenge ist vom Querschnitt und der Höhe des Durchbruchs abhängig und kann durch Änderung dieser Parameter beliebig variiert werden. Nun werden die Dosierplatte und die Gegenplatte derart gegeneinander verschoben, daß der mit dem viskosen Medium gefüllte Durchbruch der Dosierplatte genau über dem Durchbruch der Gegenplatte zu stehen kommt. Der Innendurchmesser des Durchbruchs der Dosierplatte entspricht dem Innendurchmesser des innen hohlen Röhrchens, welches sich in dem Durchbruch der Gegenplatte befindet. Nun wird der Stempel in den Durchbruch der Dosierplatte und nachfolgend in das Röhrchen bis an das Röhrchenende eingeschoben. Dadurch wird das viskose Medium aus dem Röhrchen heraus auf die Auflagefläche gedrückt. Die Dosiergenauigkeit dieser erfindungsgemäßen Vorrichtung ist insbesondere bei kleinen Dosiermengen deutlich erhöht. Der Durchmesser des Röhrchens und entsprechend der des Stempels kann sehr klein gewählt werden. Es ist nicht erforderlich, ihn bei unterschiedlichen Dosiermengen zu variieren. Vielmehr kann die Dosiermenge über die Höhe des Durchbruchs der Dosierplatte variiert werden. Infolge des kleinen Durchmessers des Stempels ist die Menge des viskosen Mediums, die beim Zurückziehen des Stempels von der Auflagefläche am Stempel haften bleibt, sehr gering. Zudem kommt es beim Zurückziehen des Stempels noch zu einem Abtropfeffekt am Rand des Röhrchens. Die Dosiergenauigkeit, die sich mit dieser Vorrichtung erzielen läßt, liegt in der Größenordnung von ca. 1 mm³. Ein weiterer Vorteil dieser Vorrichtung ist, daß sowohl von unten nach oben als auch von oben nach unten dosiert werden kann.

Die biegsame Ausbildung des Röhrchens und des Stempels ermöglicht es, das viskose Medium auch auf vertikal oder schräg liegende Auflageflächen aufzubringen. Sollen beispielsweise in einem sich in der Montage befindlichen Gerät, z.B. einem Magnetbandkassettengerät, genau dosierte Fettmengen an Auflageflächen aufgebracht werden, so lassen sich mit der erfindungsgemäßen Vorrichtung nahezu beliebig in dem Gerät verteilte Auflageflächen erreichen.

Eine weitere vorteilhafte Ausgestaltung der Erfindung ist dadurch gekennzeichnet, daß oberhalb der Dosierplatte eine Führungsplatte vorgesehen ist, welche je Stempel einen Durchbruch zur Führung des Stempels aufweist.
Die Führungsplatte ist ein Hilfsmittel, um eine weitgehende Automatisierung des Dosiervorganges zu ermöglichen.

Eine weitere vorteilhafte Ausgestaltung der Erfindung ist dadurch gekennzeichnet, daß in dem Durchbruch der Führungsplatte eine Hülse befestigt ist, deren Innendurchmesser dem Durchmesser des Durchbuchs der Dosierplatte entspricht und daß ein Hülsenende formschlüssig auf der Oberseite der Dosierplatte aufliegt.

Durch das formschlüssige Aufliegen der Hülse auf der Oberseite der Dosierplatte wird verhindert, daß beim Einfahren des Stempels in den Durchbruch der Dosierplatte ein Teil des sich in dem Durchbruch befindenden viskosen Mediums auf die Oberseite der Dosierplatte entweicht.

Eine weitere vorteilhafte Ausgestaltung der Erfindung ist dadurch gekennzeichnet, daß der Stempel an einer Oberplatte angeordnet ist, welche senkrecht zu den Ober- und Unterseiten der Dosierplatte und der Gegenplatte bewegbar ist. Die Oberplatte ist ein Hilfsmittel, um eine weitgehende Automatisierung des Dosiervorganges zu ermöglichen. So ist es insbesondere möglich, an der Oberplatte mehrere Stempel zu befestigen, welche beim Herunterfahren der Oberplatte in entsprechend angeordnete Durchbrüche der Führungsplatte und der Dosierplatte und nachfolgend in entsprechend angeordnete Röhrchen eingeschoben werden. Dadurch wird das gleichzeitige Aufbringen genau dosierter Mengen auf mehrere Auflageflächen möglich.

Eine weitere vorteilhafte Ausgestaltung der erfindungsgemäßen Vorrichtung ist dadurch gekennzeichnet, daß Oberplatte, Führungsplatte, Dosierplatte und Gegenplatte eine Gesamteinheit bilden, die, geführt von einem Führungsgestell, senkrecht zu den Oberseiten und Unterseiten der Platten verfahrbar ist.

Vor dem Einschieben des Stempels wird die Gesamteinheit derart abgesenkt, daß ein Röhrchenende über der Auflagefläche zu liegen kommt. Danach wird der Stempel durch Herunterfahren der Oberplatte in den Durchbruch der Dosierplatte und nachfolgend in das Röhrchen bis in eine Endposition eingeschoben, und das viskose Medium wird auf die Auflagefläche gedrückt, wobei die Führungsplatte, die Dosierplatte und die Gegenplatte ihre relative Position zu dem Führungsgestell beibehalten. Danach wird die Gesamteinheit hochgefahren, wobei der Stempel und die Oberplatte zunächst in der Endposition verbleiben. Dies verhindert, daß ein Teil des viskosen Mediums beim Zurückziehen des Stempels von der Auflagefläche in das innen hohle Röhrchen abgesaugt wird. Erst danach wird der Stempel durch Herauffahren der Oberplatte aus dem Röhrchen und dem Durchbruch der Dosierplatte herausgefahren, wobei die Führungsplatte, die Dosierplatte und die Gegenplatte ihre relative Position zu dem Führungsgestell beibehalten.

Die erfindungsgemäße Vorrichtung kann vorzugsweise verwendet werden zum Aufbringen einer genau dosierten Menge einer Klebepaste auf eine Leiterplatte zum Fixieren eines Bauelementes, zum Aufbringen einer genau dosierten Menge einer Lötpaste auf eine Leiterplatte oder zum Aufbringen von Fett auf Fettpunkte eines Magnetbandkassettengerätes.

Einige schematisch dargestellte Ausführungsbeispiele des Gegenstandes der Erfindung werden nachfolgend anhand der Zeichnung in den Fig. 1 bis 6 näher erläutert. Es zeigen:
Fig. 1 ein erstes Ausführungsbeispiel einer teilweise dargestellten Vorrichtung zum genauen Dosieren eines viskosen Mediums, welches sich auf der Oberseite einer in horizontaler Richtung beweglichen, einen Durchbruch aufweisenden Dosierplatte befindet, deren Unterseite auf einer einen Durchbruch aufweisenden Gegenplatte aufliegt, wobei der Durchbruch der Dosierplatte und der Durchbruch der Gegenplatte sich nicht überdecken,
Fig. 2 die teilweise dargestellte Dosiervorrichtung gemäß Fig. 1 mit einer Rakeleinrichtung, mittels derer ein Teil des viskosen Mediums in den Durchbruch der Dosierplatte eingebracht worden ist,
Fig. 3 die teilweise dargestellte Dosiervorrichtung gemäß Fig. 1 und Fig. 2, wobei die Dosierplatte derart verschoben wurde, daß der mit dem viskosen Medium gefüllte Durchbruch der Dosierplatte sich genau über dem Durchbruch der Gegenplatte befindet,
Fig. 4 die teilweise dargestellte Dosiervorrichtung gemäß Fig. 1 bis Fig. 3 mit einer oberhalb der Dosierplatte angeordneten Führungsplatte, welche einen Durchbruch aufweist, in dem eine Hülse befestigt ist, und wobei sich die Hülse genau über dem Durchbruch der Dosierplatte befindet,
Fig. 5 als zweites Ausführungsbeispiel eine teilweise dargestellte Dosiervorrichtung, welche zwei biegsame Röhrchen aufweist, mittels denen das zu dosierende Medium gleichzeitig auf räumlich entfernt angeordnete Aufnahmeflächen, die sich z.B. in einem Magnetbandkassettengerät befinden, aufgebracht wird und
Fig. 6 eine funktionelle Darstellung der erfindungsgemäßen Dosiervorrichtung mit einer Oberplatte, einer Führungsplatte, einer Dosierplatte und einer Gegenplatte, welche eine auf- und abfahrbare Gesamteinheit bilden, wobei die Dosiervorrichtung drei Röhrchen aufweist, mittels denen das zu dosierende Medium gleichzeitig auf drei räumlich entfernt angeordnete Aufnahmeflächen aufgebracht wird.

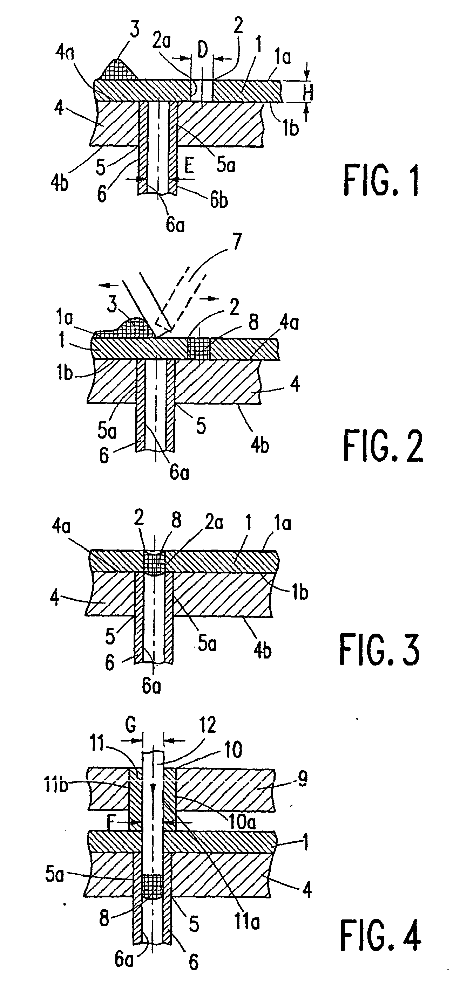

Die Fig. 1 bis 4 zeigen ein erstes Ausführungsbeispiel einer Dosiervorrichtung zu verschiedenen Zeitpunkten des Dosiervorganges. Um die Darstellung übersichtlicher zu machen, sind für die einzelnen Zeitpunkte immer nur Teile der Dosiervorrichtung dargestellt.
Ein in Fig. 1 dargestellter Teil einer Dosiervorrichtung weist eine Dosierplatte 1 mit einer Oberseite 1a, einer Unterseite 1b sowie einer Plattendicke H auf. In der Dosierplatte 1 befindet sich ein kreisrunder Durchbruch 2 mit einem Durchbruchsdurchmesser D und einer Durchbruchswand 2a. Auf der Oberseite 1a der Dosierplatte 1 befindet sich seitlich des Durchbruchs 2 ein zu dosierendes viskoses Medium 3. Die Unterseite 1b der Dosierplatte 1 liegt auf einer Gegenplatte 4 auf, welche eine Oberseite 4a, eine Unterseite 4b sowie einen Durchbruch 5 mit Durchbruchswänden 5a aufweist. In dem Durchbruch 5 ist ein innen hohles Röhrchen 6 befestigt, welches Innenwände 6a aufweist und dessen Innendurchmesser E gleich dem Durchmesser D des Durchbruchs 2 der Dosierplatte 1 ist. Die Dosierplatte 1 ist gegenüber der Gegenplatte 4 in horizontaler Richtung verschiebbar. In der in Fig. 1 dargestellten Stellung der Dosierplatte 1 ist diese derart angeordnet, daß sich der Durchbruch 2 der Dosierplatte 1 und der Durchbruch 5 der Gegenplatte 4 nicht überdecken.

Die in Fig. 1 dargestellte Stellung der Dosierplatte 1 nimmt diese auch in Fig. 2 ein. Zusätzlich ist eine angedeutete Rakeleinrichtung 7 erkennbar, welche parallel zu der Oberseite 1a der Dosierplatte 1 arbeitet und mittels derer eine Dosiermenge 8 des zu dosierenden Mediums 3 in den Durchbruch 2 der Dosierplatte 1 eingebracht worden ist. Die eingebrachte Dosiermenge 8 ist dabei von dem Durchmesser D des Durchbruchs 2 der Dosierplatte 1 sowie von der Höhe H der Dosierplatte 1 abhängig. Durch Variation des Durchmessers D des Durchbruchs 2 bzw. der Höhe H der Dosierplatte 1 läßt sich die Dosiermenge 8 beliebig variieren. Bei einer Änderung des Durchmessers D des Durchbruchs 2 ist jedoch zu beachten, daß der Innendurchmesser E des Röhrchens 6 entsprechend angepaßt werden muß.

In Fig. 3 ist die Dosierplatte 1 gegenüber der in den Fig. 1 und 2 gezeigten Stellung derart verschoben worden, daß der mit der Dosiermenge 8 des viskosen Mediums 3 gefüllte Durchbruch 2 der Dosierplatte 1 genau über dem Durchbruch 5 der Gegenplatte 4 zu stehen gekommen ist. Damit fluchten die Innenwände 2a des Durchbruchs 2 der Dosierplatte 1 mit den Innenwänden 6a des in dem Durchbruch 5 befestigten Röhrchens 6.

In Fig. 4 nimmt die Dosierplatte 1 die in Fig. 3 gezeigte Stellung gegenüber der Gegenplatte 4 ein. Zusätzlich ist oberhalb der Dosierplatte 1 eine Führungsplatte 9 angeordnet, welche einen Durchbruch 10 mit Durchbruchswänden 10a aufweist. In dem Durchbruch 10 der Führungsplatte 9 ist eine innen hohle Hülse 11 befestigt, welche eine Innenwand 11a und eine Außenwand 11b aufweist. Der Innendurchmesser F der Hülse 11 entspricht dem Durchmesser D des Durchbruchs 2 der Dosierplatte 1 sowie dem Innendurchmesser E des Röhrchens 6. Die Führungsplatte 9 mit der Hülse 11 ist derart angeordnet, daß die Innenwand 11a der Hülse 11, die Durchbruchswand 2a des Durchbruchs 2 der Dosierplatte 1 und die Innenwand 6a des Röhrchens 6 fluchten. In die Hülse 11, den Durchbruch 2 und das Röhrchen 6 ist ein Stempel 12 eingeschoben. Der Außendurchmesser G dieses Stempels 12 entspricht dem Innendurchmesser F der Hülse 11, dem Durchmesser D des Durchbruchs 2 und dem Innendurchmesser E des Röhrchens 6. Mittels dieses Stempels 12 kann die Dosiermenge 8 des viskosen Mediums 3 aus dem Durchbruch 2 der Dosierplatte 1 zunächst in das Röhrchen 6 geschoben werden und dann aus dem Röhrchen 6 herausgedrückt werden. In Fig. 4 ist der Stempel 12 nur soweit in das Röhrchen 6 eingeschoben worden, daß sich die Dosiermenge 8 noch innerhalb des Röhrchens 6 befindet.

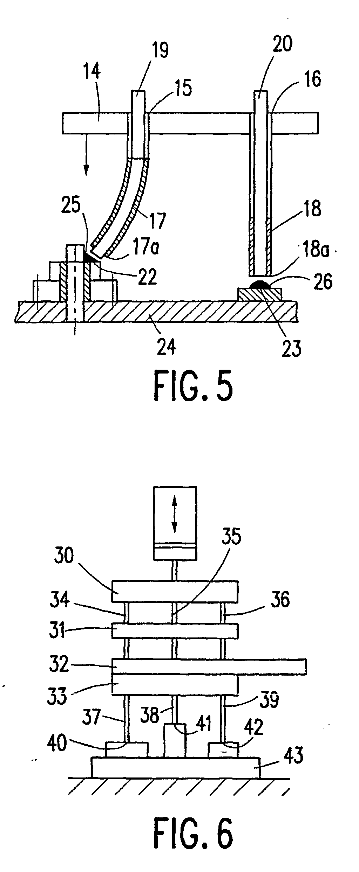

In Fig. 5 ist als weiteres Ausführungsbeispiel eine Dosiervorrichtung in Teilen dargestellt, welche eine Gegenplatte 14 aufweist, in der sich zwei Durchbrüche 15 und 16 befinden. In diesen Durchbrüchen 15 und 16 sind zwei biegsame Röhrchen 17 und 18 befestigt, in denen sich zwei ebenfalls biegsame, in den Röhrchen 17 und 18 verschiebbare Stempel 19 und 20 befinden. Die Röhrchenenden 17a bzw. 18a der biegsamen Röhrchen 17 und 18 befinden sich unmittelbar über Auflageflächen 22 und 23 eines Gerätes 24. Die Auflageflächen 22 und 23 könnten z.B. zu fettende Flächen in einem Magnetbandkassettengerät oder Lötpads auf einer Leiterplatte sein. Mittels der Stempel 19 und 20 sind Dosiermengen 25 und 26 eines viskosen Mediums aus den Röhrchen 17 und 18 auf die Auflageflächen 22 und 23 aufgebracht worden.

Fig. 6 zeigt eine prinzipielle Funktionsdarstellung einer Dosiervorrichtung, welche eine Automatisierung des Dosiervorganges ermöglicht. Sie weist eine Oberplatte 30, eine Führungsplatte 31, eine Dosierplatte 32 und eine Gegenplatte 33 auf. An der Oberplatte 30 sind drei Stempel 34, 35 und 36 befestigt. Mittels dieser Stempel 34, 35 und 36 soll eine nicht dargestellte Dosiermenge eines viskosen Mediums aus Röhrchen 37, 38 und 39 auf Auflageflächen 40, 41 und 42 eines Gerätes 43 gedrückt werden. Die Röhrchen 37, 38 und 39 befinden sich in nicht dargestellten Durchbrüchen der Gegenplatte 33. Zunächst sind die Oberplatte 30, die Führungsplatte 31, die Dosierplatte 32 und die Gegenplatte 33 kraftschlüssig miteinander verriegelt. Dann werden diese vier Platten 30, 31, 32, 33 gemeinsam herunter gefahren bis in eine Stellung, in der die Röhrchen 37, 38 und 39 unmittelbar über den Auflageflächen 40, 41 und 42 zu liegen kommen. Diese Position ist in Fig. 6 dargestellt. Nachfolgend wird die Verriegelung der Oberplatte 30 gelöst, und sie wird allein herunter gefahren, während die Führungsplatte 31, die Dosierplatte 32 und die Gegenplatte 33 ihre Position beibehalten. Dadurch werden die Stempel 34, 35 und 36 in die Röhrchen 37, 38 und 39 eingefahren und die gewünschte Dosiermenge des viskosen Mediums aus den Röhrchen 37, 38 und 39 auf die Auflageflächen 40, 41 und 42 gedrückt. Nun wird die Oberplatte 30 wieder mit den anderen drei Platten 31, 32 und 33 verriegelt und alle vier Platten 30, 31, 32 und 33 gemeinsam nach oben gefahren. Dadurch werden die Röhrchen 37, 38 und 39 von den Auflageflächen 40, 41 und 42 entfernt, wobei die Stempel 34, 35 und 36 ihre relative Position in den Röhrchen 37, 38 und 39 beibehalten. Nachfolgend wird die Verriegelung der Oberplatte 30 gelöst, und sie wird allein herauf gefahren, während die Führungsplatte 31, die Dosierplatte 32 und die Gegenplatte 33 ihre Position beibehalten. Dadurch werden die Stempel 34, 35 und 36 aus den Röhrchen 37, 38 und 39 herausgefahren. Durch diese Abfolge wird ein Absaugen des viskosen Mediums von den Auflageflächen 40, 41 und 42 in die Röhrchen 37, 38 und 39 verhindert, welches aufreten könnte, wenn die Stempel 34, 35 und 36 heraufgefahren werden, während sich die Röhrchen 37, 38 und 39 noch über den Auflageflächen 40, 41 und 42 befinden.

## Patentansprüche

1. Vorrichtung zum Aufbringen genau dosierter Mengen eines viskosen Mediums (3) auf Auflageflächen (22, 23; 40, 41, 42), bestehend aus
- einer mindestens einen Durchbruch (5; 15, 16) aufweisenden Gegenplatte (4; 14; 33) mit einer Oberseite (4a) und einer Unterseite (4b),
- einer mindestens einen Durchbruch (2) aufweisenden Dosierplatte (1; 32) mit einer Oberseite (1a) und einer Unterseite (1b), wobei die Unterseite (1b) der Dosierplatte (1; 32) auf der Oberseite (4a) der Gegenplatte (4; 14; 33) aufliegt und wobei es möglich ist, die relative Lage zwischen der Gegenplatte (4; 14; 33) und der Dosierplatte (1; 32) durch ein Verschieben von Dosierplatte (1; 32) oder Gegenplatte (4; 14; 33) zu verändern,
- je Durchbruch (5; 15, 16) der Gegenplatte (4; 14; 33) einem innen hohlen, biegsamen Röhrchen (6; 17, 18; 37, 38, 39), das aus der Gegenplatte herausragt und dessen Außenwand (6b) an einem Röhrchenende mit der Durchbruchswand (5a) des Durchbruchs (5; 15, 16) der Gegenplatte (4; 14; 33) formschlüsssig verbunden ist,
- je Durchbruch (5; 15,16) der Gegenplatte (4; 14; 33) einem biegsamen Stempel (12; 19, 20; 34, 35, 36) der durch die Durchbrüche der Dosierplatte (1; 32) und der Gegenplatte (4; 14; 33) und durch das innen hohle Röhrchen (6; 17, 18; 37, 38, 39) einschiebbar ist,
- einer parallel zu der Oberseite (la) der Dosierplatte (1; 32) arbeitenden Rakeleinrichtung (7), mittels derer ein viskoses Medium (3) in den Durchbruch (2) der Dosierplatte (1; 32) eingebracht werden kann.

2. Vorrichtung nach Anspruch 1 oder 2, **dadurch gekennzeichnet, daß** oberhalb der Dosierplatte (1; 32) eine Führungsplatte (9; 31) vorgesehen ist, welche je Stempel (12; 19, 20; 34, 35, 36) einen Durchbruch (10) zur Führung des Stempels (12; 19, 20; 34, 35, 36) aufweist.

3. Vorrichtung nach Anspruch 3, **dadurch gekennzeichnet, daß** in dem Durchbruch (10) der Führungsplatte (9; 31) eine Hülse (11) befestigt ist, deren Innendurchmesser dem Durchmesser des Durchbruchs (2) der Dosierplatte (1; 32) entspricht und daß ein Hülsenende formschlüssig auf der Oberseite (1a) der Dosierplatte (1; 32) aufliegt.

4. Vorrichtung nach einem der Ansprüche 1 bis 4, **dadurch gekennzeichnet, daß** der Stempel (12; 19, 20; 34, 35, 36) an einer Oberplatte (30) angeordnet ist, welche senkrecht zu den Ober- und Unterseiten der Dosierplatte (1; 32) und der Gegenplatte (4; 14; 33) bewegbar ist.

5. Vorrichtung nach einem der Ansprüche 1 bis 5, **dadurch gekennzeichnet, daß** Oberplatte (30), Führungsplatte (31), Dosierplatte (32) und Gegenplatte (33) eine Gesamteinheit bilden, die, geführt von einem Führungsgestell, senkrecht zu den Oberseiten und Unterseiten der Platten (30, 31, 32, 33) verfahrbar ist.

6. Verfahren zum Aufbringen genau dosierter Mengen des viskosen Mediums (3) auf die Auflageflächen (22, 23; 40, 41, 42) mittels einer Vorrichtung nach einem der Ansprüche 1 bis 5 wobei zunächst die Gegenplatte (4; 14; 33) und die Dosierplatte (1; 32) derart gegeneinander verschoben werden, daß der Durchbruch (5; 15, 16) der Gegenplatte (4; 14; 33) und der Durchbruch (2) der Dosierplatte (1; 32) sich nicht überdecken, daß nachfolgend das viskose Medium (3) mittels der Rakeleinrichtung (7) in den Durchbruch (2) der Dosierplatte (1; 32) eingebracht wird, daß die Dosierplatte (1; 32) und die Gegenplatte (4; 14; 33) dann derart gegeneinander verschoben werden, daß der mit dem viskosen Medium (3) gefüllte Durchbruch (2) der Dosierplatte (1; 32) genau über dem Durchbruch (5; 15, 16) der Gegenplatte (4; 14; 33) zu stehen kommt, daß der biegsame Stempel (12; 19, 20; 34, 35, 36) in den Durchbruch der Dosierplatte (1; 32) und der Gegenplatte (4; 14; 33) und nachfolgend in das biegsame Röhrchen (6; 17, 18; 37, 38, 39) eingeschoben wird und daß das viskose Medium (3) mittels des biegsamen Stempels (12; 19, 20; 34, 35, 36) aus dem biegsamen Röhrchen (6; 17, 18; 37, 38, 39) auf die Auflageflächen (22, 23; 40, 41, 42) gedrückt wird.

7. Verfahren nach Anspruch 6, **dadurch gekennzeichnet, daß** der Stempel (12; 19, 20; 34, 35, 36) beim Einschieben in den Durchbruch der Dosierplatte (1; 32) und der Gegenplatte (4; 14; 33) und beim Einschieben in das Röhrchen (9; 31) von den Durchbrüchen (10) der Führungsplatte(9; 31) geführt wird.

8. Verfahren nach Anspruch 6 oder 7, **dadurch gekennzeichnet, daß** die Gesamteinheit vor dem Einschieben des Stempels (12; 19, 20; 34, 35, 36) derart abgesenkt wird, daß ein Ende des Röhrchens (6; 17, 18; 37, 38, 39) über den Auflageflächen (22, 23; 40, 41, 42) zu liegen kommt, daß dann der Stempel (12; 19, 20; 34, 35, 36) in die Durchbrüche der Dosierplatte (1; 32) und der Gegenplatte (4; 14; 33) und nachfolgend in das Röhrchen (6; 17, 18; 37, 38, 39) bis in eine Endposition eingeschoben wird und das viskose Medium (3) auf die Auflageflächen (22, 23; 40, 41, 42) drückt, und daß dann die Gesamteinheit mit dem sich in der Endposition befindenden Stempel (12; 19, 20; 34, 35, 36) angehoben wird.

9. Verwendung der Vorrichtung oder des Verfahrens nach einem der Ansprüche 1 bis 8 zum Aufbringen einer genau dosierten Menge einer Klebepaste auf eine Leiterplatte zum Fixieren eines Bauelementes.

10. Verwendung der Vorrichtung oder des Verfahrens nach einem der Ansprüche 1 bis 8 zum Aufbringen einer genau dosierten Menge einer Lötpaste auf eine Leiterplatte.

11. Verwendung der Vorrichtung oder des Verfahrens nach einem der Ansprüche 1 bis 8 zum Aufbringen von Fett auf Fettpunkte eines Magnetbandkassettengerätes.

## Claims

1. An apparatus or device for depositing precisely metered or dosed amounts of a viscous medium (3) on support surfaces (22, 23; 40, 41, 42), comprising
• a backing plate (4; 14; 33) with an upper side (4a) and a lower side (4b) and comprising at least one through hole (5; 15, 16),
• a dosing plate (1; 32) comprising at least one through hole (2) and having an upper side (1a) and a lower side (1b) which lower side (1b) of the dosing plate (1; 32) rests on the upper side (4a) of the backing plate (4; 14; 33), while it is possible to change the positions of the backing plate (4; 14; 33) and the dosing plate (1; 32) relative to one another through shifting of the dosing plate (1; 32) or backing plate (4; 14; 33),
• an internally hollow, flexible tube (6; 17, 18; 37, 38, 39) which projects from the backing plate and whose outer wall (6b) is connected with excact fit to the hole wall (5a) of the hole (5; 15, 16) of the backing plate (4; 14; 33) at one end of the tube, for each through hole (5; 15, 16) of the backing plate (4; 14; 33),
• a flexible die (12; 19, 20; 34, 35, 36) which can be passed through the through holes of the dosing plate (1; 32) and of the backing plate (4; 14; 33) and through the internally hollow tube (6; 17, 18; 37, 38, 39), for each through hole (5; 15, 16) of the backing plate (4; 14; 33),
• a wiper device (7) operating parallel to the upper side (1a) of the dosing plate (1; 32), by means of which a viscous medium (3) can be introduced into the through hole (2) of the dosing plate (1; 32).

2. A device as claimed in Claim 1, **characterized in that** a guide plate (9; 31) is provided above the dosing plate (1; 32), which guide plate comprises for each die (12; 19, 20; 34, 35, 36) a through hole (10) for guiding the die (12; 19, 20; 34, 35, 36).

3. A device as claimed in Claim 2, **characterized in that** a sleeve (11) is fastened in the through hole (10) of the guide plate (9; 31), the internal diameter of said sleeve corresponding to the diameter of the hole (2) of the dosing plate (1; 32), while an end of the sleeve bears and exactly fits on the upper side (1a) of the dosing plate (1; 32).

4. A device as claimed in any one of the Claims 1 to 3, **characterized in that** the die (12; 19, 20; 34, 35, 36) is mounted to an upper plate (30) which is movable perpendicularly to the upper and lower sides of the dosing plate (1; 32) and of the backing plate (4; 14, 33).

5. A device as claimed in any one of the Claims 1 to 4, **characterized in that** the upper plate (30), guide plate (31), dosing plate (32), and backing plate (33) form an assembled unit which, guided by a guide frame, is movable perpendicularly to the upper sides and lower sides of the plates (30, 31, 32, 33).

6. A method of applying exactly dosed quantities of the viscous medium (3) to the support surfaces (22, 23; 40, 41, 42) by means of a device as claimed in any one of the Claims 1 to 6, **characterized in that** first the backing plate (4; 14; 33) and the dosing plate (1; 32) are mutually shifted such that the through hole (5; 15, 16) of the backing plate (4; 14; 33) and the through hole (2) of the dosing plate (1; 32) are not in communication, **in that** subsequently the viscous medium (3) is introduced into the through hole (2) of the dosing plate (1; 32) by means of the wiper device (7), **in that** the dosing plate (1; 32) and the backing plate (4; 14; 33) are mutually shifted such that the through hole (2) of the dosing plate (1; 32) filled with the viscous medium (3) is brought exactly above the through hole (5; 15, 16) of the backing plate (4; 14; 33), **in that** the flexible die (12; 19, 20; 34, 35, 36) is inserted into the through holes of the dosing plate (1; 32) and of the backing plate (4; 14; 33) and subsequently into the flexible tube (6; 17, 18; 37, 38, 39), and **in that** the viscous medium (3) is pressed from the flexible tube (6; 17, 18; 37, 38, 39) onto the support surfaces (22, 23; 40, 41, 42) by the flexible die (12; 19, 20; 34, 35, 36).

7. A method as claimed in Claim 6, **characterized in that** the die (12; 19, 20; 34, 35, 36) is guided by the through holes (10) of the guide plate (9; 31) during its insertion into the through holes of the dosing plate (1; 32) and of the backing plate (4; 14; 33) and during its insertion into the tube (9; 31).

8. A method as claimed in Claim 6 or 7, **characterized in that** the assembled unit is lowered before the insertion of the die (12; 19, 20; 34, 35, 36) such that an end of each tube (6; 17, 18; 37, 38, 39) will be present above the relevant support surface (22, 23; 40, 41, 42), **in that** then the die (12; 19, 20; 34, 35, 36) is inserted into the through holes of the dosing plate (1; 32) and the backing plate (4; 14; 33) and subsequently into the tube (6; 17, 18; 37, 38, 39) up to an end position and presses the viscous medium (3) onto the support surfaces (22, 23; 40, 41, 42), and **in that** then the assembled unit is lifted with the die (12; 19, 20; 34, 35, 36) in the end position.

9. The use of the device or the method as claimed in any one of the Claims 1 to 8 for the application of an exactly dosed quantity of an adhesive paste to a printed circuit board for fixing a component.

10. The use of the device or the method as claimed in any one of the Claims 1 to 8 for the application of an exactly dosed quantity of a soldering paste to a printed circuit board.

11. The use of the device or the method as claimed in any one of the Claims 1 to 8 for the application of a lubricant to lubrication points of a magnetic tape cassette appliance.

## Revendications

1. Dispositif pour appliquer sur des surfaces (22, 23; 40, 41, 42) des quantités exactement dosées d'un matériau visqueux (3) présentant :
- une contre-plaque (4 ; 14 ; 33) présentant au moins un orifice traversant (5 ; 15, 16) avec une face supérieure (4a) et une face inférieure (4b),
- une plaque de dosage (1 ; 32 ) présentant au moins un orifice traversant (2) avec une face supérieure (1a) et une face inférieure (1b), la face inférieure (1b) de la plaque de dosage (1 ; 32) étant appliquée sur la face supérieure (4a) de la contre-plaque (4 ; 14 ; 33), auquel cas il est possible de modifier la position relative entre la contre-plaque 4 ; 14 ; 33) et la plaque de dosage (1 ; 32) par un glissement de la plaque de dosage (1 ; 32) ou de la contre-plaque (4 ; 14 ; 33),
- par orifice traversant (5 ; 15 ; 16) de la contre-plaque (4 ; 14. 33), un tuyau flexible creux interne (6, 17, 18 ; 37, 38, 39) qui déborde de la contre-plaque et dont la paroi extérieure (6b) est fixée mécaniquement à une extrémité de tuyau avec la paroi de l'orifice traversant (5a) de l'orifice traversant (5 ; 15, 16) de la contre-plaque (4 ; 14 ; 33),
- par orifice traversant (5 ; 15 ; 16) de la contre-plaque (4 ; 14, 33), un poinçon flexible (12, 19, 20 ; 34, 35, 36) qui peut être introduit par les orifices traversants de la plaque de dosage (1 ; 32) de la contre-plaque (4 ; 14 ; 33) et par le tuyau creux interne (6 ; 17, 18 ; 37, 38, 39),
- un dispositif de raclage (7) travaillant parallèlement à la face supérieure (la) de la plaque de dosage (1 ; 32), à l'aide duquel un matériau visqueux (3) peut être introduit dans l'orifice traversant (2) de la plaque de dosage (1 ; 32).

2. Dispositif selon la revendication 1, **caractérisé en ce qu'**une plaque de guidage (9 ; 31) est prévue au-dessus de la plaque de dosage (1 ; 32) et présente par poinçon (12, 19; 20; 34, 35, 36) un orifice traversant (10) pour le guidage du poinçon (12, 19, 20 ; 34, 35, 36).

3. Dispositif selon la revendication 2, **caractérisé en ce qu'**une gaine (11) dont le diamètre intérieur correspond au diamètre de l'orifice traversant (2) de la plaque de dosage (1 ; 32) est fixée dans l'orifice traversant (10) de la plaque de guidage (9 ; 31) et qu'une extrémité de gaine est appliquée en liaison mécanique sur la face supérieure (1a) de la plaque de dosage (1 ; 32).

4. Dispositif selon l'une des revendications 1 à 3, **caractérisé en ce que** le poinçon (12, 19 ; 20; 34, 35, 36) est disposé sur une plaque supérieure (30) qui est mobile perpendiculairement aux faces supérieures et inférieures de la plaque de dosage (1 ; 32) et de la contre-plaque (4 ; 14 ; 33).

5. Dispositif selon l'une des revendications 1 à 4, **caractérisé en ce que** la plaque supérieure (30), la plaque de guidage (31), la plaque de dosage (32) et la contre-plaque (33) forment une unité globale qui, guidée par un châssis de guidage, est déplaçable perpendiculairement aux faces supérieure et inférieure des plaques (30, 31, 32, 33).

6. Procédé d'application de quantités exactement dosées du matériau visqueux (3) sur les surfaces (22, 23 ; 40, 41, 42) à l'aide d'un dispositif selon l'une des revendications 1 à 5, la contre-plaque (4 ; 14; 33) et la plaque de dosage (1 ; 32) étant d'abord déplacées l'une contre l'autre de telle sorte que l'orifice traversant (5 ; 15, 16) de la contre-plaque (4 ; 14 ; 33) et l'orifice traversant (2) de la plaque de dosage (1 ; 32) ne se recouvrent pas, qu'ensuite, le matériau visqueux (3) est introduit à l'aide du dispositif de raclage (7) dans l'orifice traversant (2) de la plaque de dosage (1 ; 32), que la plaque de dosage (1 ; 32) et la contre-plaque (4 ; 14; 33) sont alors déplacées l'une contre l'autre de telle sorte que l'orifice traversant (2) de la plaque de dosage (1 ; 32) rempli du matériau visqueux (3) vienne se placer exactement sur l'orifice traversant (5 ; 15, 16) de la contre-plaque (4 ; 14 ; 33), que le poinçon (12, 19; 20; 34, 35, 36) flexible soit inséré dans l'orifice traversant de la plaque de dosage (1 ; 32) et de la contre-plaque (4; 14 ; 33) et ensuite dans le tuyau flexible (6; 17, 18; 37, 38, 39) et que le matériau visqueux (3) soit pressé à l'aide du poinçon flexible (12, 19; 20 ; 34, 35, 36) hors du tuyau flexible (6 ; 17, 18 ; 37, 38, 39) sur les surfaces (22, 23 ; 40, 41, 42).

7. Procédé selon la revendication 6, **caractérisé en ce que** le poinçon (12, 19; 20, 34, 35, 36) soit guidé lors de l'introduction dans l'orifice traversant de la plaque de dosage (1 ; 32) et de la contre-plaque (4 ; 14 ; 33) et lors de l'introduction dans le tuyau (9 ; 31) par les orifices traversants (10) de la plaque de guidage (9; 31).

8. Procédé selon l'une des revendications 6 ou 7, **caractérisé en ce que** l'unité globale est abaissée avant l'introduction du poinçon (12 ; 19; 20; 34, 35, 36) de telle sorte qu'une extrémité du tuyau (6; 17; 18 ; 37, 38, 39) vienne se placer sur les surfaces (22, 23; 40, 41, 42), que le poinçon (12 ; 19; 20; 34, 35, 36) soit alors introduit dans les orifices traversants de la plaque de dosage (1; 32) et de la contre-plaque (4 ; 14; 33) et, ensuite, dans le tuyau (6 ; 17, 18 ; 37, 38, 39) jusqu'à une position de fin de course et presse le matériau visqueux (3) sur les surfaces d'application (22, 23; 40, 41, 42) et que l'unité globale est alors relevée avec le poinçon (12, 19, 20; 34, 35, 36) se trouvant dans la position de fin de course.

9. Mise en oeuvre du dispositif ou du procédé selon l'une des revendications 1 à 8 pour l'application d'une quantité exactement dosée d'une pâte adhésive sur une carte à circuits imprimés pour la fixation d'un élément.

10. Mise en oeuvre du dispositif ou du procédé selon l'une des revendications 1 à 8 pour l'application d'une quantité exactement dosée d'une pâte à souder sur une carte à circuits imprimés.

11. Mise en oeuvre du dispositif ou du procédé selon l'une des revendications 1 à 8 pour l'application de graisse sur des points de graissage d'un magnétophone à cassette.
